Europäisches Patentamt

European Patent Office

Office européen des brevets

(19)

(11) Veröffentlichungsnummer: **0 209 484**
**B1**

(12) **EUROPÄISCHE PATENTSCHRIFT**

(45) Veröffentlichungstag der Patentschrift: **18.07.90**

(51) Int. Cl.⁵: **B 60 B 39/00**

(21) Anmeldenummer: **86730113.7**

(22) Anmeldetag: **17.07.86**

(54) Gleitschutzvorrichtung für Kraftfahrzeuge.

(30) Priorität: **19.07.85 DE 3526359**
**11.09.85 DE 3532801**

(43) Veröffentlichungstag der Anmeldung:
**21.01.87 Patentblatt 87/04**

(45) Bekanntmachung des Hinweises auf die
Patenterteilung:
**18.07.90 Patentblatt 90/29**

(84) Benannte Vertragsstaaten:
**AT BE CH DE FR GB IT LI NL SE**

(56) Entgegenhaltungen:
**DE-U-8 526 271**
**US-A-1 374 252**
**US-A-2 241 923**
**US-A-2 815 828**

(73) Patentinhaber: **RUD-Kettenfabrik Rieger & Dietz
GmbH u. Co.
Friedensinsel
D-7080 Aalen 1 (DE)**

(72) Erfinder: **Rieger, Hansjörg, Dr.-Ing.
Saarstrasse 48
D-7080 Aalen (DE)**
Erfinder: **Hofmann, Peter
Heulenbergweg 76
D-7080 Aalen-Unterkochen (DE)**
Erfinder: **Biehler, Wolfgang
Eisenschmiede 2
D-7080 Aalen-Unterkochen (DE)**

(74) Vertreter: **Böning, Manfred, Dr. Ing. et al
Patentanwälte Dipl.-Ing. Dieter Jander Dr. Ing.
Manfred Böning Kurfürstendamm 66
D-1000 Berlin 15 (DE)**

**Beschreibung**

Die Erfindung betrifft eine Gleitschutzvorrichtung für Kraftfahrzeuge mit mehreren über den Umfang eines gegen den Reifen eines Fahrzeuges drück- und in eine Umlaufbewegung versetzbaren Halters verteilten elastischen Spreizarmen, an die Gleitschutzmittel bildende Kettenstränge angeschlossen sind, deren den Spreizarmen abgewandte Enden bei in der Betriebsstellung umlaufendem Halter unter Fliehkrafteinwirkung vom Halter weggeschleudert werden und von denen zumindest Teile bei sich drehendem Fahrzeugreifen den Bereich der Bodenberührungsfläche des Reifens passieren.

Aus der DE—OS 29 14 366 ist eine Gleitschutzvorrichtung der vorstehenden Art bekannt, bei der die Spreizarme als von Gummiummantelungen fest umschlossene Seil- oder Kettenstrangabschnitte ausgebildet sind. Die Gummiummantelungen weisen dabei an einem Ende einen mit einer Ringnut versehenen Kopf auf, der zusammen mit einem Schließring zur Verankerung der Spreizarme am Halter dient und dessen federnde Eigenschaften ein leichtes Auswechseln der Spreizarme und der von ihnen gehaltenen Kettenstränge ermöglichen sollen. Die bekannte Lösung vermag schon deshalb nicht zu befriedigen, weil bei ihr die Festigkeit der Verankerung der Spreizarme und der mit diesen verbundenen Kettenstränge am Halter zu wünschen übrig läßt. Abgesehen hiervon, belastet der bei der bekannten Konstruktion unumgängliche Vulkanisationsprozeß die Herstellungskosten der Spreizarme in ungünstiger Weise.

Mit den Spreizarmen wird das Ziel verfolgt, die die Gleitschutzmittel bildenden Kettenstränge in eine günstige Position gegenüber der Reifenabrollfläche bzw. dem Keilspalt zwischen Fahrzeugreifen und Fahrbahn zu überführen. Außerdem soll einem Verwickeln der Kettenstränge entgegengewirkt werden. Dem gleichen Zweck dienen bei einer aus der US—PS 30 68 949 bekannten Gleitschutzvorrichtung zwischen die Gleitschutzelemente und den Halter geschaltete Zugfedern, deren eines Ende jeweils eine Öse für einen zum Befestigen der Federn am Halter dienenden Schraubenbolzen aufweist. Bei dieser zweiten bekannten Vorrichtung müssen die Zugfedern im Hinblick darauf, daß sie große Fliehkräfte zu übertragen haben, erhebliche Windungsquerschnitte aufweisen, die ihrer Flexibilität enge Grenzen setzen. Hinzu kommt, daß insbesondere im Bereich des Überganges zwischen der Befestigungsöse und dem Hauptteil der Feder erhebliche wechselnde Kräfte auftreten, die die Gefahr frühzeitiger Ermüdungsbrüche mit sich bringen.

Eine Gleitschutzvorrichtung, bei der Gleitschutzmittel bildende Kettenstränge über Federn mit einem Halter verbunden sind, zeigt die FR—PS 409 260. Bei dieser Vorrichtung ist der Halter jedoch nicht gegen den Fahrzeugreifen drückbar und die zu seinem Antrieb dienenden Federn werden ebenfalls nicht unerheblichen Zugkräften ausgesetzt.

Aus der US—A—2,241,923 ist eine Gleitschutzeinrichtung ohne Spreizarme bekannt, bei welcher die Gleitschutzelemente an Kettenstücken befestigt sind, welche von Federn umgeben sind. Diese Federn erfüllen jedoch nur die Funktion von Puffern.

Der Erfindung liegt die Aufgabe zugrunde, eine Gleitschutzvorrichtung der in Betracht gezogenen Art zu schaffen, die kostengünstig gefertigt werden kann, eine sichere Halterung der die Gleitschutzmittel bildenden Kettenstränge am Halter gewährleistet und bei dem die Spreizarme sich schnell und ohne große Schwingbewegungen in ihre Ausgangslage zurückbewegen. Diese Aufgabe wird erfindungsgemäß dadurch gelöst, daß die Spreizarme von Druckfedern gebildet werden, die durch Verbindungelemente vorgespannt sind, welche die Kettenstränge mit dem Halter verbinden.

Die erfindungsgemässe Gleitschutzvorrichtung bietet den Vorteil daß infolge der Verwendung vorgespannter Druckfedern als Spreizarme der Ein- und Auslauf der Gleitschutzmittel in den bzw. aus dem Bereich der Bodenabrollfläche des Reifens deutlich verbessert wird, wobei ein bei den bekannten Konstruktionen auftretender Peitscheneffekt der Spreizarme vermieden wird. Dadurch, daß die die Gleitschutzmittel bildenden Kettenstränge über Verbindungselemente und nicht über die Spreizarme mit dem Halter verbunden sind, ist die Gewähr für ihre einwandfreie und sichere Verankerung am Halter gegeben. Es ist darüberhinaus anders als bei Konstruktionen der zuerst beschriebenen bekannten Gattung möglich, ein und dieselben Verbindungselemente mit Druckfedern unterschiedlicher Steifigkeit zu kombinieren, um auf diese Weise eine Anpassung des Betriebsverhaltens der Vorrichtung an unterschiedliche Gegebenheiten zu erreichen.

Bei der erfindungsgemäßen Gleitschutzvorrichtung werden die Druckfedern während des Einsatzes im Bereich ihrer halterseitigen Enden am stärksten verformt. Dabei kann es insbesondere dann, wenn die Verbindungselemente von Kettenstrangabschnitten gebildet werden, zu Berührungen zwischen den Verbindungselementen und den Druckfedern kommen, die Verschleisserscheinungen an den Druckfedern fördern. Um die Druckfedern in der Nähe ihrerhalterseitigen Enden von einem direkten Kontakt mit Teilen der Verbindungselemente, insbesondere mit Schenkeln von Kettengliedern zu bewahren, sind in weiterer Ausgestaltung der Erfindung im Bereich der dem Halter zugewandten Enden der Druckfedern zwischen den Verbindungselementen und den Druckfedern Hülsen angeordnet. Auf diese Weise läßt sich die Standzeit der Druckfedern und somit der Gleitschutzvorrichtung insgesamt erhöhen.

Weitere Einzelheiten und Merkmale der efindungsgemässen Konstruktion ergeben sich aus den Unteransprüchen und der nachfolgenden Beschreibung der in der beigefügten Zeichnung dargestellten Ausführungsbeispiele. Es zeigen:

Fig. 1 die perspektivische Ansicht einer sich im Einsatz befindlichen Gleitschutzvorrichtung,

Fig. 2 stark schematisiert die Vorderansicht einer Gleitschutzvorrichtung im Betrieb,

Fig. 3 in vergrößertem Maßstab die Ausbildung eines Spreizarmes für eine Gleitschutzvorrichtung der in Fig. 1 und 2 dargestellten Art,

Fig. 4 eine leicht modifizierte Ausführungsform eines Spreizarmes,

Fig. 5 einen Schnitt durch einen besonders einfach aufgebauten Halter einer Gleitschutzvorrichtung, wobei aus Gründen der Übersichtlichkeit lediglich ein Spreizarm für Kettenstränge dargestellt ist, und

Fig. 6 in vergrössertem Maßstab einen gegenüber der Ausführung gemäß Fig. 2 leicht modifizierten Spreizarm.

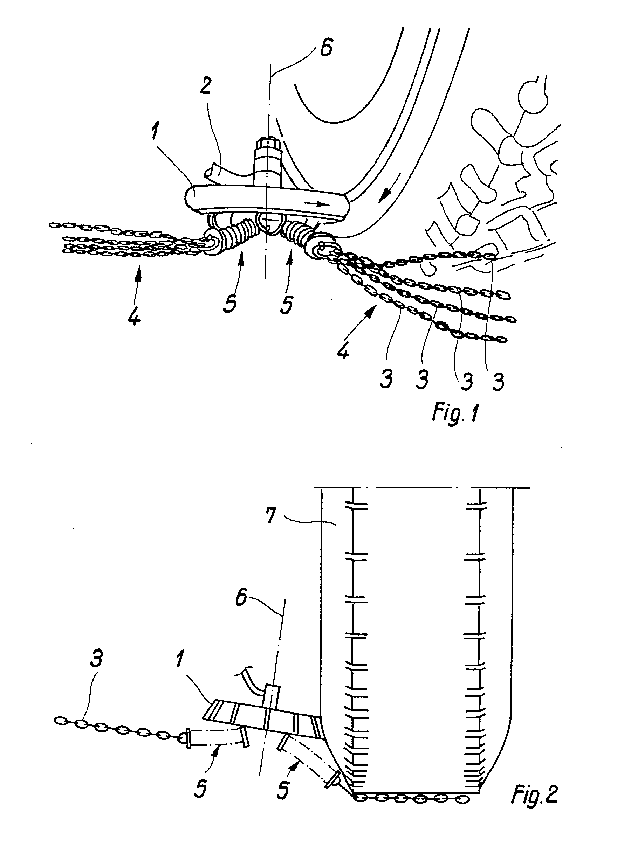

In Fig. 1 ist 1 der als Reibrad ausgebildete Halter einer Gleitschutzvorrichtung, die an einem Auslegerarm 2 befestigt ist. Der Halter 1 ist mit sechs gleichmäßig über seinen Umfang verteilten aus jeweils vier Kettensträngen 3 bestehent 4 den Kettenstranggruppen ausgestattet, von denen zur Erhöhung der Übersichtlichkeit lediglich zwei dargestellt wurden. Die einzelnen Kettenstranggruppen 4 sind über elastische Spreizarme 5 mit dem Halter 1 verbunden.

Wie aus Fig. 2 erkennbar ist, steht die Drehhachse 6 des Halters 1 schräg zur Fahrbahn und die Spreizarme 5, an denen im Falle der Fig. 2 nur jeweils ein Kettenstrang angeschlossen ist, stehen ihrerseits schräg zur Drehachse 6, so daß sie schräg zur Abrollfläche des Reifens 7 verlaufen.

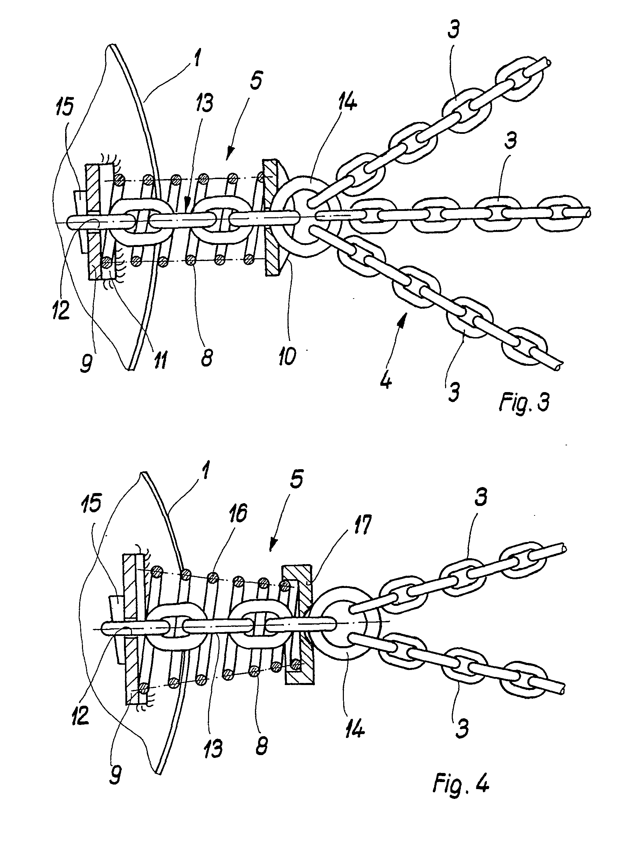

Einzelheiten des Aufbaues con Spreizarmen 5 ergeben sich aus den Fig. 3 und 4.

In Fig. 3 wird der Spreizarm 5 von einer zylindrischen Druckfeder 8 gebildet, die zwischen zwei Widerlager 9 und 10 angeordnet ist. Das Widerlager 9 ist fest mit dem Halter verbunden und bildet eine schräg zur Unterseite des Halters verlaufende Stützfläche 11 für das eine Ende der Druckfeder 8. Durch eine Ausnehmung 12 des Widerlagers ragt das Endglied eines Kettenstrangabschnittes 13, der ein Verbindungselement bildet, welches die durch einen Ring 14 zu einer Kettenstranggruppe 4 zusammengefaßten Kettenstränge 3 mit dem Halter 1 verbindet. Das Endglied ist am Halter 1 dabei durch ein Verriegelungsorgan 15 gesichert.

Der Ring 14 bildet einen Anschlag für das Widerlager 10. Der Abstand zwischen den Widerlagern 9 und 10 ist so gewählt, daß die Druckfeder 8 mit einer ausreichenden Vorspannung beaufschlagt wird, wobei allerdings dafür Vorsorge getragen werden muß, daß die Windungen der Feder 8 sich nicht berühren. Auf die beschriebene Weise wird erreicht, daß der Spreizarm einerseits ausreichend flexibel ist, andererseits aber nicht zu unerwunscht starken Schwingbewegungen neigt. Als vorteilhaft erweist es sich, daß die Druckfeder 8 gleichzeitig zur Arretierung des Verriegelungsorganes 15 genutzt werden kann.

Der Spreizarm gemäß Fig. 4 entspricht weitgehend dem Spreizarm gemäß Fig. 3. Für einander entsprechende Teile wurden daher die gleichen Bezugzeichen verwendet, so daß an dieser Stelle lediglich noch auf die Unterschiede zwischen den beiden Konstruktionen hingewiesen zu werden braucht.

Während bei dem Ausführungsbeispiel gemäß Fig. 3 eine zylindrische Druckfeder Verwendung findet, ist die den Spreizarm 5 gemäß Fig. 4 bildende Druckfeder 16 konisch ausgebildet. Außerdem hat das dem Halter 1 abgewandte Widerlager 17 die Form einer Kappe, welche das freie Federende führt.

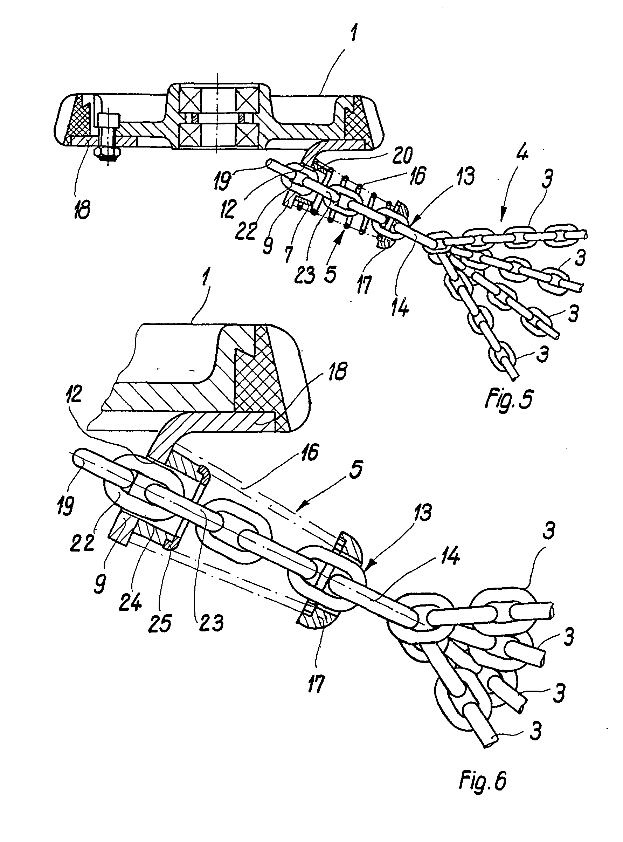

In Fig 5 ist 1 ein Halter an dessen Unterseite ein scheibenförmiges Stanzteil 18 geschraubt ist und der zur Halterung von wiederum zu Gruppen bzw. Bündeln 4 zusammengefassten Kettensträngen 3 dient. Über den Umfang des Halters sind in der Praxis gleichmässig sechs Kettenstrangbündel verteilt. Durch jeweils ein quer gestelltes Kettenglied 19 sind am Halter Spreizarme 5 verankert. An den halterseitigen Enden der Spreizarme 5 befinden sich Hülsen 20, deren Aussenrand 21 abgerundet ist oder eine Fase aufweist. Die Hülsen 20 bilden Zentrierungen für Druckfedern 16, welche zwischen zwei Widerlager 9 und 17 angeordnet sind, wobei die Widerlager 9 von abgebogenen Zungen des Stanzteiles 18 gebildet werden. Zur Lagefixierung der Hülse 20 gegenüber dem Widerlager 9 wird das Kettenglied 22 genutzt, welches in einer Ausnehmung 12 des Widerlagers 9 geführt ist. 13 ist ein als Kettenstrangabschnitt ausgebildetes Verbindungselement, das die Kettenstränge 3 mit dem Halter verbindet. Am Ende des Verbindungselementes 13 ist ein Ring 14 angeordnet, der die Kettenstränge 3 zu einer Kettenstranggruppe zusammenfasst.

Die Druckfeder 16 ist wie im Falle der Fig. 4 zumindest auf einem Teil ihrer Länge konisch ausgebildet. Ihr freies Ende kann aber auch zylindrisch sein. Während des Einsatzes der Gleitschutzvorrichtung werden die Spreizarme 5 deformiert. Die stärkste Deformation findet dabei im Bereich des Kettengliedes 23 des das Verbindungselement 13 bildenden Kettenstrangabschnittes statt. Die Hülse 20 verhindert, dass es zu verschleissfördernden Reibungskontakten zwischen dem Kettenglied 23 und den in dessen Nähe gelegenen Windungen der Druckfeder 16 kommt. Die Hülsen 20 ragen zu diesem Zweck um einen Betrag in die Druckfedern 16, der der Höhe von zwei bis drei Federwindungen entspricht.

Bei dem Ausführungsbeispiel gemäß Fig. 5 ist die Hülse 20 zylindrisch ausgebildet. In Fig. 6 ist demgegenüber eine Hülse 24 mit einer konischen Aussenwand dargestellt. An dem den Kettensträngen 3 zugewandten Ende dieser Hülse ist ein Antiverschleissring 25 angeordnet, der aus einem geeigneten Material, insbesondere einem Kunststoff wie Nylon oder Teflon besteht. In beiden dargestellten Fällen werden die Hülsen 20 und 24 auf Grund der Konizität der Druckfedern 16 in ihrer Sollposition gehalten.

**Patentansprüche**

1. Gleitschutzvorrichtung für Kraftfahrzeuge mit mehreren über den Umfang eines gegen den Reifen eines Fahrzeuges drückbaren, in eine Umlaufbewegung versetzbaren Halters (1) verteilten elastischen Spreizarmen (5), an die Gleitschutzmittel bildende Kettenstränge (3) angeschlossen sind, deren den Spreizarmen (5) abgewandte Enden bei in der Bertriebsstellung umlaufendem Halter (1) unter Fliehkrafteinwirkung vom Halter (1) weggeschleudert werden und von denen zumindest Teile bei sich drehendem Fahrzeugreifen (7) den Bereich der Bodenberührungsfläche des Reifens (7) passieren, dadurch gekennzeichnet, daß die Spreizarme (5) von Druckfedern (8, 16) gebildet werden, die durch Verbindungselemente (13) vorgespannt sind, welche die Kettenstränge (3) mit dem Halter (1) verbinden.

2. Vorrichtung nach Anspruch 1, dadurch gekennzeichnet, daß die Druckfedern (8, 16) ausserhalb des Kraftflusses der von den Kettensträngen (3) auf den Halter (1) übertragenen Fliehkräfte angeordnet sind.

3. Vorrichtung nach Anspruch 1 oder 2, dadurch gekennzeichnet, daß die Druckfedern (8, 16) Schraubenfedern sind.

4. Vorrichtung nach einem der Ansprüche 1 bis 3, dadurch gekennzeichnet, daß die die Gleitschutzmittel bildenden Kettenstränge (3) an die Verbindungselemente (13) über jeweils ein Zwischenglied (14) angeschlossen sind, das zur Arretierung eines Widerlagers (10, 17) für das dem Halter (1) jeweils abgewandte Ende der Druckfedern (8, 16) dient.

5. Vorrichtung nach einem der Ansprüche 1 bis 4, dadurch gekennzeichnet, daß der Halter (1) mit Widerlagern (9) für die ihm zugewandten Enden der Druckfedern (8, 16) versehen ist.

6. Vorrichtung nach einem der Ansprüche 1 bis 5, dadurch gekennzeichnet, daß die Verbindungselemente (13) durch lösbare Verriegelungsorgane (15, 19) am Halter (1) verankert sind.

7. Vorrichtung nach Anspruch 5 oder 6, dadurch gekennzeichnet, daß die halterseitigen Widerlager (9) für die Druckfedern (8, 16) schräg zur Drehachse (6) des tellerförmigen Halters (1) verlaufen.

8. Vorrichtung nach einem der Ansprüche 4 bis 7, dadurch gekennzeichnet, daß die Zwischenglieder als Ring (14) ausgebildet sind.

9. Vorrichtung nach einem der Ansprüche 1 bis 8, dadurch gekennzeichnet, daß an die Verbindungselemente (13) jeweils mehrere zu Kettenstranggruppen (4) zusammengefaßte Kettenstränge (3) angeschlossen sind.

10. Vorrichtung nach einem der Ansprüche 1 bis 9, dadurch gekennzeichnet, daß die Verbindungselemente von Kettenstrangabschnitten (13) gebildet werden.

11. Vorrichtung nach einem der Ansprüche 4 bis 10, dadurch gekennzeichnet, daß das dem Halter (1) abgewandte Widerlager (17) für die Druckfedern (16) kappenartig ausgebildet ist.

12. Vorrichtung nach einem der Ansprüche 1 bis 11, dadurch gekennzeichnet, daß die Druckfedern (16) konisch ausgebildet sind.

13. Vorrichtung nach einem der Ansprüche 1 bis 12, dadurch gekennzeichnet, daß im Bereich der dem Halter (1) zugewandten Enden der Druckfedern (16) zwischen den Verbindungselementen (13) und den Druckfedern (16) Hülsen (20; 24) angeordnet sind.

14. Vorrichtung nach Anspruch 13, dadurch gekennzeichnet, daß die Druckfedern (16) zumindest auf einem Teil ihrer Länge konisch ausgebildet sind und sie die Hülsen (20; 24) aufgrund ihrer Konizität gegen Verschiebungen in Richtung ihrer dem Halter (1) abgewandten Enden sichern.

15. Vorrichtung nach Anspruch 14, dadurch gekennzeichnet, daß auch die Hülsen (24) konisch ausgebildet sind, wobei ihre Aussenfläche annähernd mit der inneren Hüllfläche der Druckfedern (16) zusammenfällt.

16. Vorrichtung nach einem der Ansprüche 13 bis 15, dadurch gekennzeichnet, daß die Aussenränder (7) der Hülsen (6) mindestens an ihren dem Halter (1) abgewandten Enden mit einer Abrundung oder Fase versehen sind.

17. Vorrichtung nach einem der Ansprüche 13 bis 16, dadurch gekennzeichnet, daß die Aussenränder der Hülsen (24) mindestens an ihren dem Halter (1) abgewandten Enden mit einem Antiverschleissring (25) versehen sind.

18. Vorrichtung nach einem der Ansprüche 13 bis 17, dadurch gekennzeichnet, daß die Hülsen (20; 24) um einen Betrag in die Druckfedern (16) ragen, der der Höhe von zwei bis drei Federwindungen entspricht.

19. Vorrichtung nach einem der Ansprüche 13 bis 18, dadurch gekennzeichnet, daß die Hülsen (20; 24) durch jeweils mindestens ein Kettenglied (22) eines das jeweilige Verbindungselement (13) bildenden Kettenstrangabschnittes zentriert werden.

20. Vorrichtung nach einem der Ansprüche 13 bis 19, dadurch gekennzeichnet, daß die Hülsen (20; 24) sich mit ihren, den die Gleitschutzmittel bildenden Kettensträngen (3) abgewandten Enden gegen Widerlager (9) abstützen, die von Zungen eines scheibenförmigen Stanzteiles (18) gebildet werden.

21. Vorrichtung nach Anspruch 20, dadurch gekennzeichnet, daß das Stanzteil (18) lösbar mit dem Halter (1) verbunden ist.

**Revendications**

1. Dispositif antidérapant pour véhicules automobiles, comportant plusieurs bras d'expansion élastiques (5) répartis sur la circonférence d'un support (1) pouvant être pressé contre le pneumatique du véhicule automobile et mis en mouvement de rotation, auxquels sont raccordés des faisceaux de chaînes (3) formant les moyens antidérapant, et dont les extrémités opposées aux bras d'expansion (5) sont repoussées du support (1) sous l'effet de la force centrifuge en position de service en rotation du support (1) et dont au moins des parties franchissent le secteur de la surface de contact de la roue (7) avec le sol lors de la rotation du pneumatique du véhicule (7), caractérisé en ce que les bras d'expansion (5) sont formés par des ressorts à pression (8, 16) précontraints par des éléments de liaison (13) reliant les faisceaux de chaînes (3) au support (1).

2. Dispositif selon la revendication 1, caractérisé en ce que les ressorts à pression (8, 16) sont implantés à l'extérieur du flux des forces centrifuges transmises au support (1) par les faisceaux de chaînes (3).

3. Dispositif selon la revendication 1 ou 2, caractérisé en ce que les ressorts à pression (8, 16) sont des ressorts cylindriques.

4. Dispositif selon l'une des revendications 1 à 3, caractérisé en ce que les faisceaux de chaînes (3) formant le moyen antidérapant sont chacun reliés aux éléments de liaison (13) par un maillon intermédiaire (14) servant à l'arrêt d'une butée (10, 17) pour chacune des extrémités des ressorts à pression (8, 16) opposée au support (1).

5. Dispositif selon l'une des revendications 1 à 4, caractérisé en ce que le support (1) est muni de butées (9) pour les extrémités tournées vers lui des ressorts à pression (8, 16).

6. Dispositif selon l'une des revendications 1 à 5, caractérisé en ce que les éléments de liaison (13) sont fixés sur le support (1) par des organes de verrouillage (15, 19) desserrables.

7. Dispositif selon l'une des revendications 5 ou 6, caractérisé en ce que les butées (9) du côté du support (1) pour les ressorts à pression (8, 16) sont obliques par rapport à l'axe de rotation (6) du support (1) en forme de plateau.

8. Dispositif selon l'une des revendications 4 à 7, caractérisé en ce que les maillons intermédiaires sont formés par des anneaux (14).

9. Dispositif selon l'une des revendications 1 à 8, caractérisé en ce que plusieurs faisceaux de chaînes (3) regroupés en bottes (4) sont raccordés aux éléments de liaison (13).

10. Dispositif selon l'une des revendications 1 à 9, caractérisé en ce que les éléments de liaison sont formés par des tronçons de faisceaux de chaînes (13).

11. Dispositif selon l'une des revendications 4 à 10, caractérisé en ce que la butée (17) opposée au support (1) pour les ressorts à pression (16) est formée en capuchon.

12. Dispositif selon l'une des revendications 1 à 11, caractérisé en ce que les ressorts à pression (16) sont coniques.

13. Dispositif selon l'une des revendications 1 à 12, caractérisé en ce que des douilles (20, 24) sont situées dans le secteur des extrémités des ressorts à pression (16) tournées vers le support (1), entre les éléments de liaison et les ressorts à pression (16).

14. Dispositif selon la revendication 13, caractérisé en ce que les ressorts à pression (16) sont coniques sur une partie au moins de leur longueur, et qu'ils gatantissent du fait de leur conicité, les douilles (20, 24) contre les déplacements dans le sens de leurs extrémités opposées au support (1).

15. Dispositif selon la revendication 14, caractérisé en ce que les douilles (24) sont également coniques, leur surface extérieure étant presque de la même dimension que la surface intérieure de l'enveloppe des ressorts à pression (16).

16. Dispositif selon l'une des revendications 13 à 15, caractérisé en ce que les bords extérieurs (7) des douilles (6) présentent au moins sur leurs extrémités opposées au support (1) un arrondi ou un chanfrein.

17. Dispositif selon l'une des revendications 13 à 16, caractérisé en ce que les bords extérieurs des douilles (24) sont pourvues, au moins sur leur extrémité opposée au support (1), d'un anneau anti-usure (25).

18. Dispositif selon l'une des revendications 13 à 16, caractérisé en ce que les douilles (20, 24) pénètrent dans les ressorts à pression (16) d'une hauteur correspondant à celle de deux à trois spires de ressort.

19. Dispositif selon l'une des revendications 13 à 18, caractérisé en ce que les douilles (20, 24) sont centrées chacune par au moins un maillon de chaîne (22) d'un tronçon de chaîne formant l'élément de liaison concerné (13).

20. Dispositif selon l'une des revendications 13 à 19, caractérisé en ce que les douilles (20, 24) s'appuient par leurs extrémités opposées aux faisceaux de chaînes formant le dispositif antidérapant (3), contre des butées (9) formées par des languettes d'une pièce emboutie en forme de rondelle (18).

21. Dispositif selon la revendication 20, caractérisé en ce que la pièce emboutie (18) est reliée au support (1) de manière amovible.

**Claims**

1. An anti-skid device for motor vehicles, comprising a number of resilient expansion arms (5) distributed around the periphery of a holder (I) which can be pressed against the tyres of a vehicle and driven in rotation, anti-skid means in the form of chains (3) being connected to the holder, and the ends of the chains remote from the expansion arms (5) being thrown away from the holder (1) by centrifugal force when the holder (1) is in operation and rotating and, when the vehicle tyres (7) are rotating, at least parts of the chains extend through the area of contact between the tyre (7) and the ground characterised in that the expansion arms (5) are pressure springs (8, 16) prestressed by connecting components (13) which connect the chains (3) to the holder (1).

2. A device according to claim 1, characterised in that the pressure springs (8, 16) are disposed outside the action of centrifugal forces transmitted by the chains (3) to the holder (1).

3. A device according to claim 1 or 2, characterised in that the pressure springs (8, 16) are helical springs.

4. A device according to any of claims 1 to 3, characterised in that the chains (3) constituting the anti-skid means are each connected to the connecting components (13) by an intermediate member (14) used for locking an abutment (10, 17) for the ends of the pressure springs (8, 16) remote from the holder (1).

5. A device according to any of claims 1 to 4, characterised in that the holder (1) has abutments (9) for the facing ends of the pressure springs (8, 16).

6. A device according to any of claims 1 to 5, characterised in that the connecting components (13) are anchored to the holder (1) by releasable locking means (15, 19).

7. A device according to claim 5 or 6, characterised in that the abutments (9) for the pressure springs (8, 16) on the side of the holder extend at an angle to the axis of rotation (6) of the holder (1) which is plate-shaped.

8. A device according to any of claims 4 to 7, characterised in that the intermediate members are rings (14).

9. A device according to any of claims 1 to 8, characterised in that a number of chains (3) combined into groups (4) are connected to each connecting member (13).

10. A device according to any of claims 1 to 9, characterised in that the connecting members are chain portions (13).

11. A device according to any of claims 4 to 10, characterised in that the abutments (17) for the pressure springs (16) and remote from the holder (1) are cap-shaped.

12. A device according to any of claims 1 to 11, characterised in that the pressure springs 16 are conical.

13. A device according to any of claims 1 to 12, characterised in that sleeves (20; 24) disposed between the connecting members (13) and the pressure springs (16) near the ends of the pressure springs (16) facing the holder.

14. A device according to claim 13, characterised in that the pressure springs (16) are conical along at least part of their length and, as a result of their conical shape, prevent the sleeves (20; 24) from being shifted in the direction of their ends remote from the holder (1).

15. A device according to claim 14, characterised in that the sleeves (24) are also conical, and their outer surface approximately coincides with the inner envelope of the pressure springs (16).

16. A device according to any of claims 13 to 15, characterised in that the outer edges (7) of the sleeves (6) are rounded or chamfered at least their ends remote from the holder (1).

17. A device according to any of claims 13 to 16, characterised in that the outer edges of the sleeves (24) are provided with an anti-wear ring (25) at least at their ends remote from the holder (1).

18. A device according to any of claims 13 to 17, characterised in that the sleeves (20; 24) project into the pressure springs (16) by an amount equal to the length of two or three spring turns.

19. A device according to any of claims 13 to 18, characterised in that the sleeves (20; 24) are each centred by at least one link (22) of the chain portion constituting the respective connecting means (13).

20. A device according to any of claims 13 to 19, characterised in that the ends of the sleeves (20; 24) remote from the chains (3) constituting the anti-skid means bear against abutments (9) formed by tongues of a disk-shaped stamped part (18).

21. A device according to claim 20, characterised in that the stamped part (18) is releasably connected to the holder (1).

Fig. 1

Fig. 2

Fig. 3

Fig. 4

Fig. 5

Fig. 6